# EUROPEAN PATENT SPECIFICATION

(11) **EP 0 375 458 B1**
(45) Date of publication and mention of the grant of the patent: **14.06.1995**
(21) Application number: 89313526.9
(22) Date of filing: 22.12.1989
(51) Int. Cl.: H01R 43/05, H02G 1/12

(54) **The stripping and terminating of conductors in multi core cables**
Leiterentmantelung und -abschluss in Multiaderkabeln
Le dénudage et la terminaison de conducteurs dans des câbles multiconducteurs

(30) Priority: 22.12.1988 ZA 889562
(43) Date of publication of application: 27.06.1990
(73) Proprietor: MOLEX INCORPORATED, Lisle Illinois 60532 (US)
(72) Inventor: Endres, Karl Heinrich, Johannesburg, Transvaal 2052 (ZA)
(74) Representative: Greenwood, John David

(56) References cited:
- FR-A- 2 437 080
- US-A- 3 810 289
- US-A- 3 875 662
- US-A- 3 909 900

## Description

### FIELD OF THE INVENTION

This invention relates to a method of and apparatus for stripping and terminating the conductors of multi core electrical cables which include a plurality of separately insulated conductors which are sheathed in an outer insulating sheath.

### BACKGROUND OF THE INVENTION

Machines for stripping the insulation from the ends of insulated electrical conductors and then terminating the stripped ends of the conductors with electrical connector terminals are well known. The machines range between simple manually operable arrangements to highly complicated and expensive automatic machines such as those disclosed in US-A-3,875,662 and US-A-4,713,880. The sophisticated automatic machines are made complicated by conductor gripping and moving fingers, conductor direction changing mechanisms elaborate conductor locator and feed arrangements and so on. Additionally, with most of the automatic machines manual operations such as initial insulation stripping need more often than not to be performed on the conductors prior to the terminals being crimped onto the stripped ends of the conductors.

### OBJECT OF THE INVENTION

It is the object of this invention to provide a simple method of and apparatus for stripping the insulation from the insulated conductors of multi core cables.

US-A-3,909,900 relates to apparatus fcr producing electrical conductors. Insulated wire stock is gripped at longitudinally spaced portions by a pair of clamp assemblies and cut in two by a wire and insulation cutting assembly between the clamp assemblies. The relatively adjacent ends of the cut wire are pulled apart by the clamp assemblies so as to strip the cut insulation therefrom and bring the stripped wire ends beyond a pair of terminal crimping assemblies at opposite sides of the cutting assembly. Reverse movement of the clamp assemblies then brings the stripped wire ends into the crimping assemblies, and after terminals have been attached to the stripped wire ends, the stock and severed wire length are released and reverse movement of the clamp assemblies is continued to bring them back to their starting positions. A wire transfer mechanism and slotted bracket collect successively cut off wire lengths to which terminals have been attached. Brushes suppress whipping of the moving wire stock.

US-A-4,194,281 relates to an apparatus and method for making a wire lead which comprises a pair of insulated stranded conductors encased in an insulating jacket, with a two-pronged plug at one end and either untwisted or twisted bare or tinned wires with or without terminals at the other end. The apparatus comprises mechanisms to cut and convey a cable segment, strip the insulating jacket from both ends and trim cut the exposed insulated wires, preshape them, strip and twist the stranded wires at the plug end, attach the plug at that end, and strip and perform appropriate processing operations at the other end, i.e. twist, tin or terminate.

The mechanism for stripping and twisting the end of a stranded wire comprises a gripping device which prevents axial and rotational movement of the wire, blades for severing the wire insulation, and a rotatable and axially movable spinner head which releasably grips, rotates, and axially removes the severed piece of insulation, simultaneously twisting the stranded conductors in the process.

The apparatus and method of the present invention is as claimed in claims 1 and 3, respectively.

One way of carrying out the invention will now be described in detail by way of example with reference to drawings which show one specific embodiment of apparatus according to the invention. In the drawings:
FIGURE 1 is a partially schematic and partially sectioned side elevation of the apparatus.
FIGURE 2 is a fragmentary front elevation of the conductor holder of the Figure 1 apparatus, and
FIGURE 3 is a fragmentary front elevation of the crimp punch arrangement of the Figure 1 apparatus.

### DETAILED DESCRIPTION OF THE ILLUSTRATED EMBODIMENT

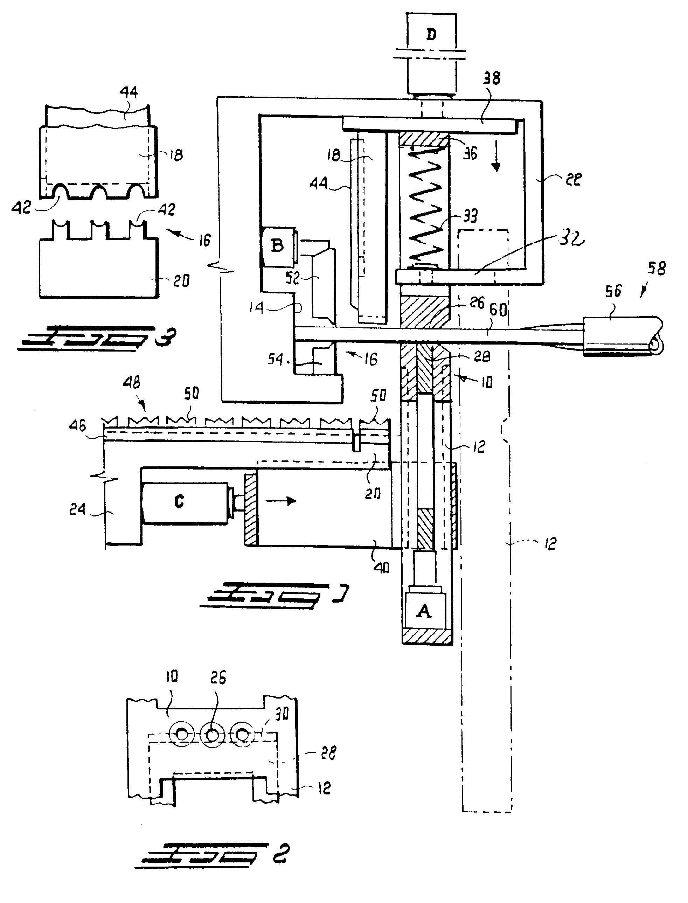

The cable stripping and terminating apparatus of the invention is shown in Figure 1 to include a conductor holder 10 which is carried in a holder frame 12, a stop member 14, a conductor stripper arrangement 16, a crimp punch 18, a crimp anvil 20, and first and second frame elements 22 and 24 which, in the apparatus of the invention, are in fact two components of a single frame.

The conductor holder 10, as is also seen in Figure 2, bridges spaced vertical elements of the holder frame 12. The holder includes, in this embodiment of the invention, three horizontally spaced bores 26 which are outwardly chamfered at their lead-in ends and a conductor gripper 28 which is vertically movable in a slot 30 in the holder body and slots in the vertical elements of the holder frame 12. The gripper 28 is movable from the position shown in Figures 1 and 2 to a slightly elevated position in which its upper edge intersects the bores 26 in the body of the holder 10. A leg 32 of the frame element 22 is located in an aperture at the upper end of the holder frame 12 and carries a slidable spring 33 which bears up against the underside of a cross member 36 of the frame 12 to bias the holder frame to the position shown in the drawing at which the upper surface of the cross member 36 bears against a platten 38. The cross member 36 is slidable against the undersurface of the platten. The platten 38 is downwardly movable from the position shown in the drawing by an air cylinder D.

The holder frame 12 is held vertically, as shown in Figure 1, in a slide 40 which is movable to the right of the position shown in Figure 1 by an air cylinder C to move the holder frame 12 to the chain dotted line position on the right hand side of the drawing. The holder frame 12 is vertically movable relatively to the slide 40 on opposite slide formations.

The upper end of the crimp punch 18 is fixed to the underside of the platten 38 and it and the crimp anvil, as shown in Figure 3, each include three sets of crimping formations 42. The crimp punch 18 additionally carries a reciprocable terminal shearing blade 44. The crimp anvil 20 is located, as shown in Figure 1, with its crimp formations 42 in register with channels on a strip feed table 46 which carries, in suitable guide slots, three U-shaped strips 48 of inter-connected electrical terminal sleeve blanks 50 which are fed in sequence towards the crimp anvil by cam operated feed fingers which are not shown in the drawing.

The conductor stripper 16 includes a downwardly movable blade 52 and a blade 54 which is fixed to the frame element 22. The cutting edges of the stripper blades carry arcuate cutting formations which are in register with the axes of the bores 26 in the holder 10 when the holder frame 12 is in the position shown in Figure 1. The stripper blade 52 is downwardly movable from the position shown in Figure 1 by an air cylinder B.

In use, the sheath 56 is stripped from the end portion of a three core cable 58 to expose the three conductors which are each sheathed in electrically insulating material 60. The free ends of the cable conductors are fed through the bores 26 in the holder 10 until their free ends abut the stop member 14, as shown in Figure 1, in which position the insulation a little way from the end of each of the now parallel conductors is in register with the opposing cutting formations on the blades of the stripper arrangement. The operator of the machine now presses a foot pedal which activates air cylinder A to lift the gripper 28 into pressure contact with the conductors in the bores 26 of the holder 10 firmly to lock the conductors to the holder. After a short time delay air cylinder B drives the blade 52 of the stripper arrangement 16 downwardly to sever between it and the formations on the blade 54 the insulation around each of the conductors. The air cylinder B at this stage holds the blade 52 down in the insulation over the conductor wires. At the end of the extension stroke of the air cylinder B a limit switch is activated which activates cylinder C to move the slide 40 in the direction of the arrow in the drawing to bring the holder frame 12 into vertical register with the chain line position on the right hand side of the drawing. In moving the holder from the solid to chain line positions in the drawing the conductor wires between the stripper blades and the stop 14 are stripped from the insulation which is held by the stripper blades. At the limit of cylinder C's stroke the stripped ends of the three conductors 60 lie immediately beneath the crimping formations 42 of the crimp punch 18. Cylinder C now activates a switch which activates cylinder D and deactivates cylinder B to enable the stripper blades 52 and 54 again to move apart for the passage of fresh conductors. An air valve, not shown, is activated to blow the cut insulation pieces from the machine. In the meantime cylinder D moves the platten 38 downwardly until the stripped ends of the wires are positively nested in the uncrimped terminals 50 on the crimper anvil 20. The crimp punch 18 simultaneously crimps the terminals 50 onto the stripped wire ends and the blade 44 cuts the now secure terminals 50 from the strips 48 on which they were located. On its downstroke the cylinder D activates a cam, not shown, which causes the feed fingers to move the three terminals strips forward on the table 46 when the cylinder D retracts to lift the holder frame 12, under the bias of the spring 33, to its upper position in the drawing and the now crimped wire ends from the anvil 20. At the end of the upward stroke of the platten 38 the air cylinder A retracts the gripper 28 to free the conductors from the bores 26 of the holder 10. Should the crimp lugs 50 be those which include flattend terminals which project beyond the width of the insulation on the conductor 60 the bores 26 in the holder would include cut-outs to enable the lugs to be drawn through the bores from the holder 10.

## Claims

1. A method of stripping and terminating the conductors of a multi core electrical cable which includes the steps of stripping a length of the outer insulation (56) from one end of the cable (58) to expose the separately insulated cable conductors (60), locating the insulated cable conductors (60) in a holder (10) with the free ends of the insulated conductors (60) projecting in a spaced parallel relationship from the holder (10), activating a gripper (28) to grip the insulation of the conductors in the holder (10), activating an insulation stripper (16) to cut the insulation on each of the conductors (60) at a predetermined distance from its free end characterised in that the stripper (16) holds the insulation between the cuts and free ends of the conductors (60), and by moving the holder (10) while gripping the conductors (60) in the axial direction of the conductors (60) away from the stripper (16) to strip the free ends of the conductors (60) from the insulation which is held by the stripper (16) and to move the conductors to a position in which the stripped ends of the conductors are in register with the crimp portions of pre-located crimp-on electrical terminals (50), terminating the conductors by activating a crimp punch (18) to crimp the terminals (50) to the stripped ends of the conductors (60), and vertically lowering the holder (10) without a change of direction from the position in which the stripped ends of the conductors (60) are in register with the crimp-on portions of the terminals (50) and then activating the crimp punch (18).

2. The method as claimed in claim 1 wherein the step of locating the insulated cable conductors (60) in the holder (10) includes placing the free ends of the conductors (60) in contact with a stop member (14) to establish the length of the stripped portion of the conductors (60).

3. An apparatus for stripping and terminating the conductors of a multi core electrical cable which carries separately insulated electrical conductors which are exposed at one end of the cable which includes a holder (10) for holding the insulated conductors (60) with the free end of each conductor projecting from the holder (10), a gripper (28) for gripping the insulation of the conductors (60) in the holder (10), means (A) for actuating the gripper (28), a stripper arrangement (16) including blades (52,54) for cutting the insulation on each conductor (60) at a predetermined distance from its free end, and means (B) for actuating the stripper arrangement characterised in the stripper holds the insulation between the cuts and the free ends of the conductors, and by means (C) for moving the holder (10) in the axial direction of the conductors (60) to a second position away from the stripper arrangement (16) to strip the free ends of the conductors (60) from the insulation when held by the stripper (16), a crimp anvil (20) which is located directly below the stripped ends of the conductors in the second position of the holder (10), a crimp punch (18) and means (D) for activating the crimp punch to crimp lugs (50) located on the anvil (20) to the stripped ends of the conductors (60), and means (D) for vertically lowering the holder (10) without a change of direction from its second position to a third position in which the stripped ends of the conductors (60) are located on the crimp portions of crimp lugs (50) which are located on the crimp anvil (20) in use.

4. An apparatus as claimed in claim 3 for stripping and terminating the conductors of a multi core electrical cable in which the apparatus includes a table (46) which is aligned wth the crimp anvil (20) and means which is activated by the holder (10) lowering means (D) to feed the terminal crimp lugs (50) of strips (48) of lugs (50) onto the anvil (20) from strip guides on the table (46) when lugs on the anvil (20) are crimped onto the stripped ends of conductors (60) in use.

5. An apparatus as claimed in claim 4 for stripping and terminating the conductors of a multi core electrical cable in which the apparatus includes a terminal cutter (44) which is operated by the crimp punch (18) to cut terminals (50) from the strips (48) which carry them when the terminals (50) have been crimped onto the stripped ends of the conductors (60) by the punch (18) in use.

6. An apparatus as claimed in claim 4 for stripping and terminating the conductors of a multi core electrical cable in which the gripper (28), stripper (16), holder moving and crimp punch actuating means (D) are air cylinders (A, B, C & D) which are inter-connected by suitable connecting arrangements for sequential operation.

7. An apparatus as claimed in anyone of claims 3 to 6 further including a stop member (14) located along the axes of said conductors when in said first position to contact the free ends of said conductors (60) to establish the length of the stripped portion of the conductors (60).

## Patentansprüche

1. Verfahren zum Abisolieren und Abschließen der Leiter eines mehraderigen elektrischen Kabels, welches die Schritte umfaßt, daß eine Länge der Außenisolierung (56) von einem Ende des Kabels (58) zum Freilegen gesondert isolierter Kabelleiter (60) abgestreift wird, die isolierten Kabelleiter (60) in einem Halter (10) mit in einem parallelen Abstandsverhältnis vom Halter (10) vorstehenden freien Enden der isolierten Leiter (60) angeordnet werden, ein Greifer (28) zum Erfassen der Isolierung der Leiter im Halter (10) aktiviert wird und ein Abisolierer (16) zum Durchschneiden der Isolierung an jedem der Leiter (60) in einem vorbestimmten Abstand von seinem freien Ende aktiviert wird, dadurch gekennzeichnet, daß der Abisolierer (16) die Isolierung zwischen den Schnitten und freien Enden der Leiter (60) hält und daß der Halter (10), während die Leiter (60) erfaßt werden, in axialer Richtung der Leiter (60) vom Abisolierer (16) fort bewegt wird, um die freien Enden der Leiter (60) von der Isolierung zu befreien, die von dem Abisolierer (16) gehalten wird, und um die Leiter in eine Position zu bewegen, in der die abisolierten Enden der Leiter mit den Crimpbereichen vorpositionierter elektrischer Crimpverbindungsanschlüsse (50) fluchten, und die Leiter durch Aktivierung eines Crimpstempels (18) zum Ancrimpen der Anschlüsse (50) an die abisolierten Enden der Leiter (60) abgeschlossen werden, wobei der Halter (10) in vertikaler Richtung ohne Richtungsänderung aus der Position abgesenkt wird, in der die abisolierten Enden der Leiter (60) mit den Crimpverbindungsbereichen der Anschlüsse (50) fluchten, und sodann der Crimpstempel (18) aktiviert wird.

2. Verfahren nach Anspruch 1, bei dem der Schritt der Anordnung der isolierten Kabelleiter (60) im Halter (10) einschließt, daß die freien Enden der Leiter (60) in Kontakt mit einem Anschlagglied (14) gebracht werden, um die Länge des abisolierten Bereichs der Leiter (60) zu bestimmen.

3. Vorrichtung zum Abisolieren und Abschließen der Leiter eines mehraderigen elektrischen Kabels, das gesondert isolierte elektrische Leiter trägt, die an einem Ende des Kabels freigelegt sind, welche Vorrichtung einen Halter (10) zum Halten der isolierten Leiter (60) mit vom Halter (10) vorstehendem freiem Ende eines jeden Leiters, einen Greifer (28) zum Erfassen der Isolierung der Leiter (60) im Halter (10), eine Einrichtung (A) zum Betätigen des Greifers (28), eine Abisolierungseinheit (16) mit Messern (52,54) zum Durchschneiden der Isolierung an jedem Leiter (60) in einem vorbestimmten Abstand von seinem freien Ende und eine Einrichtung (B) zum Betätigen der Abisolierungseinheit umfaßt, dadurch gekennzeichnet, daß der Abisolierer die Isolierung zwischen den Schnitten und den freien Enden der Leiter hält und gekennzeichnet durch eine Einrichtung (C) zum Bewegen des Halters (10) in axialer Richtung der Leiter (60) in eine zweite Position von der Abisoliereinheit (16) hinweg, um die freien Enden der Leiter (60) von der Isolierung zu befreien, wobei sie von dem Abisolierer (16) gehalten ist, einen Crimpamboß (20), der direkt unter den abisolierten Enden der Leiter in der zweiten Position des Halters (10) angeordnet ist, einen Crimpstempel (18) und eine Einrichtung (D) zum Aktivieren des Crimpstempels, um auf dem Amboß (20) angeordnete Nasen (50) auf die abisolierten Enden der Leiter (60) zu crimpen, und eine Einrichtung (D) zum vertikalen Absenken des Halters (10) ohne Richtungsänderung aus seiner zweiten Position in eine dritte Position, in der die abisolierten Enden der Leiter (60) auf den Crimpbereichen von Crimpnasen (50) angeordnet sind, die auf dem Crimpamboß (20) im Betrieb angeordnet sind.

4. Vorrichtung nach Anspruch 3 zum Abisolieren und Abschließen der Leiter eines mehraderigen elektrischen Kabels, wobei die Vorrichtung einen Tisch (46), der mit dem Crimpamboß (20) fluchtet, und eine Einrichtung aufweist, die durch die Absenkeinrichtung (D) des Halters (10) aktiviert wird, um die Anschlußcrimpnasen (50) von Streifen (48) der Nasen (50) auf den Amboß (20) von Streifenführungen auf dem Tisch (46) vorzuschieben, wenn Nasen auf dem Amboß (20) auf die abisolierten Enden von Leitern (60) im Betrieb aufgecrimpt werden.

5. Vorrichtung nach Anspruch 4 zum Abisolieren und Abschließen der Leiter eines mehraderigen elektrischen Kabels, wobei die Vorrichtung eine Anschlußschneidvorrichtung (44) aufweist, die von dem Crimpstempel (18) betätigt wird, um Anschlüsse (50) von den Streifen (48) abzuschneiden, die sie tragen, wenn die Anschlüsse (50) auf die abisolierten Enden der Leiter (60) vom Stempel (18) im Betrieb aufgecrimpt worden sind.

6. Vorrichtung nach Anspruch 4 zum Abisolieren und Abschließen der Leiter eines mehraderigen elektrischen Kabels, wobei die Betätigungsmittel des Greifers (28), des Abisolierers (16), der Halterbewegung und des Crimpstempels Pneumatikzylinder (A, B, C und D) sind, die durch geeignete Verbindungseinrichtungen für einen aufeinanderfolgenden Betrieb miteinander verbunden sind.

7. Vorrichtung nach einem der Ansprüche 3 bis 6, ferner mit einem Anschlagglied (14), das in Richtung der Achsen der Leiter, wenn sie in der ersten Position sind, angeordnet ist, um die freien Enden der Leiter (60) zur Bestimmung der Länge des abisolierten Bereichs der Leiter (60) zu bestimmen.

## Revendications

1. Procédé pour dénuder et raccorder les conducteurs d'un câble électrique à plusieurs conducteurs, qui comprend les étapes consistant à dénuder une longueur de l'isolant extérieur (56) d'une extrémité du câble (58) pour exposer les conducteurs de câbles isolés séparément (60), positionner les conducteurs de câbles isolés (60) dans un dispositif de maintien (10) avec les extrémités libres des conducteurs isolés (60) s'avançant parallèlement et à distance les unes des autres depuis le dispositif de maintien (10), activer un dispositif de serrage (28) pour saisir l'isolant des conducteurs dans le dispositif de maintien (10), activer un dispositif de dénudage d'isolant (16) pour couper l'isolant sur chacun des conducteurs (60) à une distance prédéterminée de leur extrémité libre,
caractérisé en ce que le dispositif de dénudage (16) maintient l'isolant entre les coupures et les extrémités libres des conducteurs (60), et, en déplaçant le dispositif de maintien (10) tout en serrant les conducteurs (60) dans le sens axial des conducteurs (60) pour les éloigner du dispositif de dénudage (16) afin de dénuder les extrémités libres des conducteurs (60) de l'isolant qui est maintenu par le dispositif de dénudage (16) et de déplacer les conducteurs à une position dans laquelle les extrémités dénudées des conducteurs sont en alignement avec les portions à sertir de bornes électriques à sertir (50) préalablement positionnées, raccordant les conducteurs en activant une presse à sertir (18) pour sertir les bornes (50) sur les extrémités dénudées des conducteurs (60), et en abaissant le dispositif de maintien (10) dans le sens vertical sans changement de direction par rapport à la position dans laquelle les extrémités dénudées des conducteurs (60) sont alignées avec les portions à sertir des bornes (50) et en activant alors la presse à sertir (18).

2. Procédé selon la revendication 1, dans lequel l'étape de positionnement des conducteurs isolés du câble (60) dans le dispositif de maintien (10) consiste à placer les extrémités libres des conducteurs (60) en contact avec une pièce de butée (14) afin de déterminer la longueur de la portion dénudée des conducteurs (60).

3. Appareil pour dénuder et raccorder les conducteurs d'un câble électrique à plusieurs conducteurs qui comporte des conducteurs électriques isolés séparément qui sont exposés à une extrémité du câble, comprenant un dispositif de maintien (10) pour maintenir les conducteurs isolés (60) avec l'extrémité libre de chaque conducteur s'avançant depuis le dispositif de maintien (10), un dispositif de serrage (28) pour saisir l'isolant des conducteurs (60) dans le dispositif de maintien (10), des moyens (A) pour actionner le dispositif de serrage (28), un agencement de dénudage (16) comprenant des lames (52, 54) pour couper l'isolant de chaque conducteur (60) à une distance prédéterminée de son extrémité libre, et des moyens (B) pour actionner l'agencement de dénudage, caractérisé en ce que le dispositif de dénudage maintient l'isolant entre les coupures et les extrémités libres des conducteurs, et par des moyens (C) pour déplacer le dispositif de maintien (10) dans le sens axial des conducteurs (60) vers une deuxième position éloignée de l'agencement de dénudage (16) pour dénuder les extrémités libres des conducteurs (60) de leur isolant quand elles sont maintenues par le dispositif de dénudage (16), une enclume de sertissage (20) qui est positionnée directement au-dessous des extrémités dénudées des conducteurs dans la deuxième position du dispositif de maintien (10), une presse à sertir (18) pour sertir des cosses (50) situées sur l'enclume (20) aux extrémités dénudées des conducteurs (60), ainsi que par des moyens (D) pour abaisser dans le sens vertical le dispositif de maintien (10), sans modifier la direction par rapport à sa deuxième position, vers une troisième position dans laquelle les extrémités dénudées des conducteurs (60) sont positionnées sur les portions à sertir de cosses à sertir (50) qui sont situées sur l'enclume de sertissage (20) en cours d'utilisation.

4. Appareil selon la revendication 3 pour dénuder et raccorder les conducteurs d'un câble électrique à plusieurs conducteurs, dans lequel l'appareil comprend une table (46) qui est alignée avec l'enclume de sertissage (20), et des moyens qui sont activés par le dispositif de maintien (10) en abaissant des moyens (D) pour envoyer les cosses de borne à sertir (50) de bandes (48) de cosses (50) sur l'enclume (20) à partir de guides de bandes sur la table (46) quand des cosses sur l'enclume (20) sont serties sur les extrémités dénudées des conducteurs (60) en cours d'utilisation.

5. Appareil selon la revendication 4 pour dénuder et raccorder les conducteurs d'un câble électrique à plusieurs conducteurs, dans lequel l'appareil comprend un dispositif de découpage de bornes (44) qui est manoeuvré par la presse à sertir (18) pour découper des bornes (50) à partir des bandes (48) qui les portent quand les bornes (50) ont été serties sur les extrémités dénudées des conducteurs (60) par la presse (18) en fonctionnement.

6. Appareil selon la revendication 4 pour dénuder et raccorder les conducteurs d'un câble électrique à plusieurs conducteurs, dans lequel les moyens pour déplacer le dispositif de serrage (28), le dispositif de dénudage (16) et le dispositif de maintien (10) et actionner la presse à sertir (18) sont des vérins à air comprimé (A, B, C, D) qui sont interconnectés par des agencements appropriés de raccordement pour un fonctionnement séquentiel.

7. Appareil selon l'une quelconque des revendications 3 à 6, comprenant en outre une pièce de butée (14) située le long des axes desdits conducteurs quand ils sont dans ladite première position, pour entrer en contact avec les extrémités libres desdits conducteurs (60) afin de déterminer la longueur de la portion dénudée des conducteurs (60).
